(19) Europäisches Patentamt
European Patent Office
Office européen des brevets

(11) Veröffentlichungsnummer: **0 236 835 B1**

(12) # EUROPÄISCHE PATENTSCHRIFT

(45) Veröffentlichungstag der Patentschrift: **10.06.92**

(51) Int. Cl.[5]: **C08L 81/02**, C08K 5/10

(21) Anmeldenummer: **87102573.0**

(22) Anmeldetag: **24.02.87**

(54) **Verwendung von Carbonsäureestern als Kristallisationsbeschleuniger in Polyphenylensulfidmassen.**

(30) Priorität: **08.03.86 DE 3607712**

(43) Veröffentlichungstag der Anmeldung: **16.09.87 Patentblatt 87/38**

(45) Bekanntmachung des Hinweises auf die Patenterteilung: **10.06.92 Patentblatt 92/24**

(84) Benannte Vertragsstaaten: **BE DE ES FR GB IT**

(56) Entgegenhaltungen:
**EP-A- 0 103 279**

**PATENT ABSTRACTS OF JAPAN, Band 7, Nr. 167 (C-177)[1312], 22. Juli 1983; & JP-A-58 74 751 (HODOGAYA KAGAKU KOGYO K.K.) 06-05-1983**

**PATENT ABSTRACTS OF JAPAN, Band 9, Nr. 59 (C-270)[1782], 15. März 1985; & JP-A-59 196 364 (ASAHI KASEI KOGYO K.K.) 07-11-1984**

(73) Patentinhaber: **BAYER AG**

**W-5090 Leverkusen 1 Bayerwerk(DE)**

(72) Erfinder: **Bier, Peter, Dr.**
**Mobay Corporation Mobay Road**
**Pittsburgh,PA 15205(US)**
Erfinder: **Reinking, Klaus, Dr.**
**Robert-Stolz-Strasse 16b**
**W-5632 Wermelskirchen 1(DE)**
Erfinder: **Bottenbruch, Ludwig, Dr.**
**Wöhlerstrasse 5**
**W-4150 Krefeld 1(DE)**
Erfinder: **Tresper, Erhard, Dr.**
**Moerser Strasse 394**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft die Verwendung von Carbonsäureestern als Kristallisationsbeschleuniger in thermoplastischen Massen aus Polyphenylensulfiden.

Polyphenylsulfide können als Rohstoffe für die Herstellung von Fasern, Folien und Formkörpern verwendet werden. Aufgrund ihrer teilkristallinen Struktur besitzen sie hervorragende Eigenschaften, z.B. hohe Verschleißfestigkeit, günstiges Zeitstandverhalten und hohe Maßgenauigkeit. Sie sind daher für die Herstellung mechanisch und thermisch stark beanspruchter Teile gut geeignet.

Eine zusätzliche Verbesserung der mechanischen Eigenschaften läßt sich durch Einarbeitung von Verstärkungsmaterialien, z.B. Glasfasern erzielen.

Die Herstellung von Formkörpern aus Polyphenylensulfid durch Spritzguß ist jedoch erschwert, da hohe Formtemperaturen (> 130 ° C) und relativ lange Preßzeiten notwendig sind. Werkzeugtemperaturen >130 ° C und mehr können bei den meisten Spritzgußverarbeitern nicht praktiziert werden, da die Werkzeuge im Normalfall für eine Temperatur um 100 ° C (Heizmittel Wasser) ausgelegt sind. Werkzeugeinrichtungen, die mit anderen Heizmitteln, z.B. Öl betrieben werden und Temperaturen >110 ° C erzielen, sind im allgemeinen selten und ihr Gebrauch ist unbequem. Sehr häufig werden auch damit in der Praxis die gewünschten Temperaturen nicht erzielt und die Temperaturverteilung ist ungleichmäßig, Wegen dieser Nachteile kann es wirtschaftlich unattraktiv sein solch hohe Werkzeugtemperaturen im Spritzgußbereich anzuwenden.

Weiterhin ist es wünschenswert hohe Kristallinität möglichst rasch zu erreichen um ein optimales Eigenschaftniveau zu erhalten. Hohe Kristallinität gewährleistet Härte, Dimensionsstabilität und Formstabilität, auch bei höheren Temperaturen. Außerdem hängt von der Formstandzeit die Dauer des Spritzzyklus ab, welche die Wirtschaftlichkeit mitbestimmt.

Diese Zyklen sind selbst bei den hohen Werkzeugtemperaturen für die Verarbeitung des Polyphenylensulfids relative lang und erschweren das Vordringen von Polyphenylensulfid bei der Herstellung von Spritzgußformkörpern.

Es wurde nun gefunden, daß Polyphenylensulfide dann höhere Kristallinität besitzen und schneller kristallisieren wenn sie 0,5 - 30 Gew.-%, bezogen auf Polyphenylensulfid monomere Carbonsäureester enthalten. Dies ermöglicht es, den für die hohe Formstabilität erforderlichen Kristallinitätsgrad schneller zu erreichen und damit die Polyphenylensulfidmassen mit stark verkürzten Spritzzyklen zu verarbeiten.

Ein weiterer Vorteil besteht in der Absenkung der Formtemperatur, ohne daß das gute Kristallisationsverhalten beeinträchtigt wird. Die Spritzgußmasse kühlt schneller ab, wodurch die Formstandzeit weiter abgekürzt wird.

Gegenstand der Erfindung ist die Verwendung von monomeren Carbonsäureestern in thermoplastichen Massen aus Polyphenylensulfid als Kristallisationsbeschleuniger, wobei man

a) 70-99,5 Gew.-% eines Polyphenylensulfids mit einer Schmelzviskosität von mindestens 5 Pas (gemessen bei 306 ° C und bei einer Schubspannung von $10^3$ Pa)

b) 0,5-30 Gew.-% bezogen auf a) und b) eines monomeren Carbonsäureesters der Formel (I) oder (II)

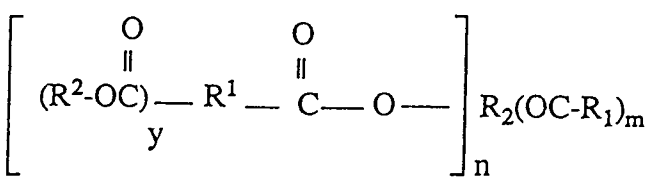

(I),

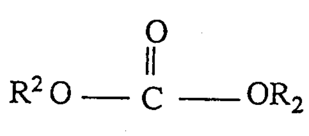

(II),

in welchen

- $R^1$ für gleiche oder unterschiedliche Reste einer linearen oder verzweigten $C_1$-$C_{25}$-aliphatischen, cycloaliphatischen, $C_{10}$-$C_{24}$-aromatischen oder $C_7$-$C_{24}$ araliphatischen Carbonsäure steht,
- $R^2$ für gleiche oder unterschiedliche Reste eines linearen oder verzweigten aliphatischen, cycloaliphatischen, araliphatischen oder aromatischen Alkohols mit 1 bis 20 C-Atomen steht,
- m für die Zahl 0,1,2,3 oder 4 steht,
- n für die Zahl 1 steht, wenn m für die Zahl 0 steht, für die Zahl 0 steht, wenn m für die Zahl 1,2,3 oder 4 steht,

y für die Zahl 1,2 oder 3 steht und
gegebenenfalls 5 bis 60 Vol-% üblichen Füllstoffen verwendet

$R_1$ und $R_2$ stehen vorzugsweise für $C_1$-$C_8$-Alkylreste. Sie können Substituenten besitzen, die mit dem Polyphenylensulfid unter Spritzgußbedingungen im wesentlichen nicht reagieren, z. B. $C_1$-$C_4$-Alkylgruppen, $NO_2$-Gruppen usw.

Beispiele für monomere Carbonsäureester sind: Dioctyladipat, Dinonylphthalat, Neopentylglykoldibenzoat.

Eine bevorzugte Ausführungsform der Erfindung ist die Verwendung der Carbonsäureester der Formeln (I) und (II) als Kristallisationsbeschleuniger in thermoplastischen Formmassen, die im Spritzgußverfahren verwendet werden, wobei man eine Mischung aus einem Polyphenylensulfid mit einer Schmelzviskosität von mindestens 5 Pas, vorzugsweise von mindestens 50 Pas bis 1200 Pas (gemessen bei 306 °C bei einer Schußspannung von $10^3$ Pa) und einem Carbonsäureester der Formeln (I) oder (II) in Formen gießt, die eine Temperatur von nicht mehr als 120 °C aufweisen, wobei die Menge an Carbonsäureester so gewählt wird, daß das spritzgegossene Polyphenylensulfid mindestens 70 % der Kristallinität aufweist, die man beim Verspritzen eines Formteils aus unmodifizierten Polyphenylensulfid bei Werkzeugtemperaturen von mindestens 130 °C erreicht.

Polyarylensulfide lassen sich auf bekannte Weise aus Dihalogenaromaten und Alkalisulfiden in Lösung herstellen (z. B. US-PS 2 513 188).

Die monomeren Carbonsäureester der Formeln (I) oder (II) können durch Veresterung oder Umsetzung von Carbonsäuren, ihren Anhydriden, Säurechloriden und/oder den entsprechenden Dialkylderivaten mit aliphatischen, cycloaliphatischen, araliphatischen oder aromatischen Alkoholen mit 1-20 C-Atomen hergestellt werden.

Eine detaillierte Beschreibung der unterschiedlichen Herstellungsmethoden ist z. B. von H. Henecka et al in Houben-Weyl, Vol VIII, Seite 359-680 (1952); von E. Müller in Houben-Weyl (1963), 1 et seq.; Georg Thieme Verlag, Stuttgart 1963; und in V.V. Korshak und S.V. Vinogradova, "Polyesters", Pergamon Press, Oxford 1965 Seiten 34-63 aufgeführt.

Bevorzugte monomere Carbonsäureester der Formeln (I) oder (II) sind solche, die von Carbonsäuren wie Adipinsäure, Azelainsäure, Sebacinsäure, 2-Ethylhexansäure, Laurinsäure, Stearinsäure, Phthalsäure, Trimellithsäure, Benzoesäure und Alkoholen wie Ethylenglykol, Propandiol, Butandiol, Hexandiol, Di-/Tri-/TetraOligoethylenglykolen, Neopentylglykol, Pentaerythrit, 2-Ethylhexanol, Octanol, Nonylalkohol, Decylalkohol, Butanol, Octylbenzylalkohol, Butylbenzylalkohol, Stearylalkohol abstammen.

Die Herstellung der Mischung von Polyphenylensulfiden und Carbonsäureester kann auf handelsüblichen Mischgeräten durchgeführt werden. Als solche eignen sich Kneter, Einwellen- und Zweiwellenextruder. Für die weitere Verarbeitung kann die erhaltene Mischung nach dem Erstarren der Schmelze granuliert werden.

Die Polyphenylensulfidzusammensetzungen können zusätzlich Füll- und/oder Verstärkungsstofe in Form von Pulvern, Fasern oder Matten enthalten. Beispiele dafür sind Metalle wie Stahl, Kupfer, Aluminium oder Kohlenstoff. Bevorzugte Füllstoffe sind Quarz, Talk oder Kaolin bevorzugte Verstärkungsstoffe sind Glasfasern. Die Mengen an Füllstoffen, bezogen auf das Gesamtcompound, liegen zwischen 5 und 60 Vol%.

Weiterhin können die Massen gegebenenfalls anorganische Pigmente wie z.B. $TiO_2$, ZnS, Phthalocyanine, Ruße, Cd-Pigmente, Spinelle oder organische Farbstoffe, Fließhilfsmittel, Entformungsmittel wie z.B. KW-Wachse, Ester-Wachse, Amidwachse, UV-Absorber und/oder Stabilisatoren enthalten.

Um die Flammfestigkeit der Produkte weiter zu erhöhen, können sie zusätzlich übliche flammhindernde Additive enthalten wie z.B. solche die Halogen, Phosphor, Phosphor-Stickstoff, gegebenenfalls in Kombination mit Oxiden der Elemente der V Nebengruppe wie z.B. Antimonoxid, enthalten.

Die Kristallisationsgeschwindigkeit der Polyphenylensulfidmassen kann durch Zusatz von anorganischen oder organischen Keimbildungsmitteln weiter erhöht werden. Dies wird bei den Spritzgußmassen standardmäßig durchgeführt. Die Mengen betragen 0,05 bis 5, vorzugsweise 0,1 bis 1 Gew.-%. Bevorzugt Keimbildungsmittel ist Mikrotalk.

Die Poylphenylensulfidmassen sind ausgezeichnete Ausgangsmaterialien für die Herstellung von Folien und Fasern, vorzugsweise für die Herstellung von Formkörpern aller Art durch Spritzguß.

Beispiele

Die Polyphenylensulfidmassen wurden durch Mischen und Homogenisieren der Basiskomponenten

(siehe Tabelle 1) mit einem 30 mm Werner und Pfleiderer Doppelwellenextruder bei einer Schmelzetemperatur von 310 °C hergestellt. Die zu Granulat zerhackten Stränge wurden über Nacht getrocknet.

Am getrockneten Granulat wurde die isotherme Kristallisationsgeschwindigkeit mit Hilfe einer DSC-Apparatus bestimmt. Vorbehandlung der Proben: Aufgeheizt bis 330 °C, 1 min auf Temperatur gehalten und in flüssigem Stickstoff abgeschreckt. Die amorphen Proben wurden in der DSC-Apparatur bei 110 °C isotherm auskristallisieren lassen, wobei die Änderung der Kristallisationswärme in Abhängigkeit der Zeit registriert wurde (exothermer Peak).

Als Maß für die Kristallisationsgeschwindigkeit ist die Zeit bis zum Erreichen des Maximums in Tabelle 1 als Halbwertszeit eingetragen.

Die in Tabelle 1 aufgeführten Proben 1-8 bestehen aus einem Polyphenylensulfid mit einer Schmelzviskosität von 90 Pas (gemessen bis 306 °C und einer Schubspannung von 1000 Pa), 3,5 Gew.-% eines monomeren Carbonsäureesters, 40 Gew.-% Glasfasern und 5 Gew.-% Mikrotalk. Beispiel 9 ist eine entsprechend Polyphenylensulfidprobe ohne Carbonsäureester zum Vergleich.

**Tabelle 1**

| Beispiel | Carbonsäureester | Isotherme (110°C) Kristallisationsgeschwindigkeit Halbwertszeit [s] |
|---|---|---|
| 1 | Adipinsäure-di-2-ethylhexylester | 12 |
| 2 | Adipinsäure-di-isononylester | 12 |
| 3 | Adipinsäure-di-butylester | 12 |
| 4 | Phthalsäure-benzylbutylester | 24 |
| 5 | Sebacinsäure-di-octylester | 26 |
| 6 | Laurinsäure-di-butylester | 26 |
| 7 | Trimellithsäure-tri-(n-octyl/n-decyl)-ester | 28 |
| 8 | Stearinsäure-tetra(pentaerythritol)-ester | 32 |
| 9 | - | 42 |

## Patentansprüche

1. Verwendung von monomeren Carbonsäureestern in thermoplastischen Massen aus Polyphenylensulfid als Kristallisationsbeschleuniger,

wobei man

a) 70-99,5 Gew.-% eines Polyphenylensulfids mit einer Schmelzviskosität von mindestens 5 Pas (gemessen bei 306 °C und bei einer Schubspannung von $10^3$ Pa)

b) 0,5-30 Gew.-% bezogen auf a) und b) eines monomeren Carbonsäureesters der Formel (I) oder (II)

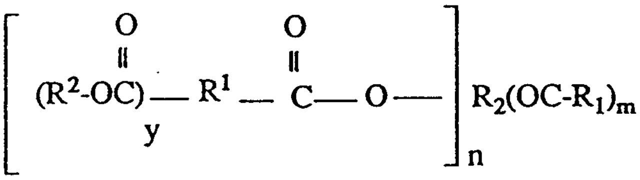

(I),

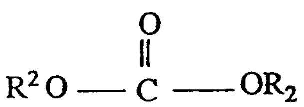

(II),

in welchen

- $R^1$ für gleiche oder unterschiedliche Reste einer linearen oder verzweigten $C_1$-$C_{25}$-aliphatischen, cycloaliphatischen, $C_{10}$-$C_{24}$-aromatischen oder $C_7$-$C_{24}$ araliphatischen Carbonsäure steht,
- $R^2$ für gleiche oder unterschiedliche Reste eines linearen oder verzweigten aliphatischen, cycloaliphatischen, araliphatischen oder aromatischen Alkohols mit 1 bis 20 C-Atomen steht,
- m für die Zahl 0,1,2,3 oder 4 steht,
- n für die Zahl 1 steht, wenn m für die Zahl 0 steht, für die Zahl 0 steht, wenn m für die Zahl 1,2,3 oder 4 steht,
- y für die Zahl 1,2 oder 3 steht und

gegebenenfalls 5 bis 60 Vol-% üblichen Zusatzstoffen verwendet.

**2.** Verwendung gemäß Anspruch 1 im Spritzgußverfahren, wobei man eine Mischung aus einem Polyphenylensulfid mit einer Schmelzviskosität von mindestens 5 Pas (gemessen bei 306 °C und einer Schubspannung von $10^3$ Pa) und einem Carbonsäureester der Formel (I) oder (II) von Anspruch 1 in Formen gießt, die eine Temperatur von nicht mehr als 120 °C aufweisen, wobei die Menge an Carbonsäureester so gewählt ist, daß das spritzgegossene Polyphenylensulfid mindestens 70 % der Kristallinität aufweist, die man beim Verspritzen eines Formteils aus unmodifiziertem Polyphenylensulfid bei Werkzeugtemperaturen von mindestens 130 °C erreicht.

## Claims

**1.** The use of monomeric carboxylic acid esters in thermoplastic compounds of polyphenylene sulfide as crystallization accelerators,

a) 70 to 99.5% by weight of a polyphenylene sulfide having a melt viscosity of at least 5 Pas (as measured at 306 °C and at a shear stress of $10^3$ Pa)

b) 0.5 to 30% by weight, based on a) and b), of a monomeric carboxylic acid ester corresponding to formula (I) or (II)

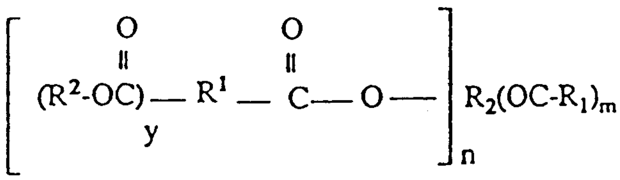

(I),

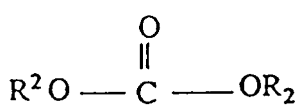

(II),

in which

the $R^1$'s may be the same or different and represent residues of a linear or branched $C_{1-25}$ aliphatic, cycloaliphatic, $C_{10-24}$ aromatic or $C_{7-24}$ araliphatic carboxylic acid,

the $R^2$'s may be the same or different and represent residues of a linear or branched aliphatic, cycloaliphatic, araliphatic or aromatic alcohol containing 1 to 20 carbon atoms,

m is the number 0,1,2,3 or 4,

n is the number 1 where m = 0 and the number 0 where m = 1,2,3 or 4,

y is the number 1, 2 or 3 and

optionally up 5 to 60% by volume typical additives being used.

**2.** The use claimed in claim 1 in injection moulding, a mixture of a polyphenylene sulfide having a melt viscosity of at least 5 Pas (as measured at 306 °C and at a shear stress of $10^3$ Pa) and a carboxylic acid corresponding to formula (I) or (II) in claim 1 being poured into moulds heated to a temperature of not more than 120 °C, the quantity of carboxylic acid ester being selected so that the injection-moulded polyphenylene sulfide has at least 70% of the crystallinity achieved in the extrusion of a moulding of unmodified polyphenylene sulfide at mould temperatures of at least 130 °C.

**Revendications**

**1.** Utilisation d'esters monomères d'acide carboxylique dans des masses thermoplastiques de polyphénylènesulfures comme accélérateurs de cristallisation mettant en oeuvre:

a) 70 à 99,5 % en poids d'un polyphénylènesulfure avec une viscosité en fusion d'au moins 5 Pas (mesurée à 306 °C et à une contrainte de cisaillement de $10^3$ Pa)

b) 0,5 à 30 % en poids par rapport à a) et b) d'un ester monomère d'acide carboxylique de formule (I) ou (II)

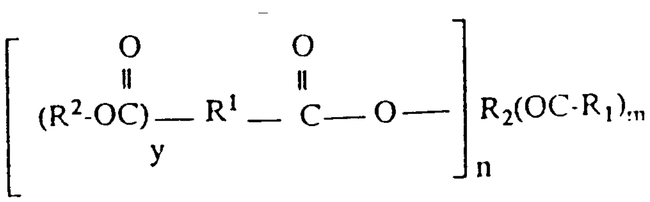

(I);

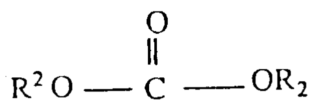

(II),

dans lesquelles

$R_1$ désigne des radicaux identiques ou différents d'un acide carboxylique linéaire ou ramifié aliphatique $C_1$-$C_{25}$, cycloaliphatique, aromatique $C_{10}$-$C_{24}$ ou araliphatique $C_7$-$C_{24}$,

$R_2$ désigne des radicaux identiques ou différents d'un alcool linéaire ou ramifié aliphatique, cycloaliphatique, araliphatique ou aromatique avec 1 à 20 atomes C,

m désigne le chiffre 0, 1, 2, 3 ou 4,

n désigne le chiffre 1 si m désigne 0 et le nombre 0 si m désigne 1, 2, 3 ou 4,

y désigne le chiffre 1, 2 ou 3 et

éventuellement, 5 à 60 % en vol. de charges classiques.

**2.** Utilisation selon la revendication 1 dans un procédé de moulage par injection, un mélange d'un polyphénylènesulfure avec une viscosité en fusion d'au moins 5 Pas (mesurée à 306 °C et à une contrainte de cisaillement de $10^3$ Pa) et d'un ester d'acide carboxylique de formule (I) ou (II) de la revendication 1 étant versé dans des moules qui présentent une température de 120 °C maximum et la quantité d'ester d'acide carboxylique étant choisie de telle sorte que le polyphénylènesulfure moulé par injection présente une cristallinité d'au moins 70% qui est atteinte par injection d'une pièce moulée en polyphénylènesulfure non modifié à des températures de moule d'au moins 130 °C.